# EUROPEAN PATENT APPLICATION

(11) **EP 0 631 003 A1**
(43) Date of publication of application: **28.12.1994**
(21) Application number: 94302052.9
(22) Date of filing: 22.03.1994
(51) Int. Cl.: D06N 7/00, A47G 27/02, B32B 25/10

(54) **Scraper carpet materials**

(30) Priority: 24.06.1993 GB 9313043
(71) Applicant: COLLIE CARPETS LIMITED, Farnworth, Bolton, Lancashire BL4 9TP (GB); THRESHOLD FLOORINGS LIMITED, Swindon, Wiltshire SN6 7AJ (GB)
(72) Inventor: Smith, Robert Stanley, Salford, Lancashire, M6 8QR (GB)
(74) Representative: Tribe, Thomas Geoffrey

(57) **Abstract**

A method of forming a washable scraper carpet, that is a carpet incorporating stiff fibres of a scraper material, which method includes the steps of bringing the length of scraper carpet material into contact with a corresponding length of uncured rubber material such as a rubber nitrile material, applying heat to the uncured rubber material for a short period at a temperature between 80°C and 120°C to enable the the rubber viscosity to reduce to a level where the rubber material can flow round the stiff fibres, and applying heat and pressure to the carpet material to enable the rubber material to laminate to the carpet material, so as to be cured, and to bond to the monofilaments and form a backing.

## Description

The present invention relates to scraper carpet materials and methods for their manufacture.

In GB Patent Specification No. 1,527,622 a form of carpeting material is disclosed which utilizes a mixture of carpet fibres and fibres of a stiff material. The carpet fibres may be any fibres conventionally used for carpets such as nylon, acrylic, regenerated cellulose, wool, polyester, cotton or polypropylene fibres or mixtures of these and the stiffer filaments are preferably heavy monofilaments for example of nylon polyester or unplasticised polypropylene. Such a carpet material is generally used as entrance mats in office buildings stores and the like where very heavy traffic arises and it is desirable to provide a high level of scraping to the underside of the shoes of those passing across the entrance.

The present invention is concerned with providing a form of carpet material of this kind having a rubber backing. Moreover, since such materials can be heavily soiled in use, it is desirable that they should be capable of being thoroughly cleaned for example by washing. This however creates a problem because during washing, the stiff fibres tend to be washed out of the carpet material.

The invention is concerned with solving this problem.

Accordingly, the invention provides a method of forming a washable scraper carpet comprising the steps of forming a quantity of scraper carpet material comprising a mixture of carpet fibres and stiff fibres of a scraper material, characterised by the steps of bringing a length of the scraper carpet material into contact with a corresponding length of uncured rubber material, applying heat to the uncured rubber material for a short period at a temperature between 80 and 120°c to enable the rubber viscosity to reduce reduce to a level where the rubber material can flow round the stiff fibres, and applying heat and pressure to the carpet material and the rubber material to enable the rubber material to laminate to the carpet material, so as to be cured, and to bond to the stiff fibres and form a backing.

The invention also provides a washable scraper carpet formed by the method, that is to say a carpet material comprising a mixture of carpet fibres and stiff fibres and having a backing of a rubber material which has been bonded to the stiff fibres by use of short pre-heating step prior to a curing and laminating step.

Preferably, the rubber material is a rubber nitrile. Other materials which behave as rubber, that is rubber compounds and rubber mixtures, are also suitable.

The stiff fibres are preferably monofilaments of a material which is compatible with this process in that they readily adhere to the rubber material. Preferred materials are heavy monofilaments of nylon, polyester and unplasticised polypropylene; or metallic filaments/fibres of 30 to 300 Tex or twisted yarn which has been reinstated to provide stiffening. Our earlier GB Patent Specification No. 1,527,622 also discloses suitable materials.

The invention can be used for entrance mats of small areas where each mat would be produced in a batch process; or a continuous length can be made by passing continuous lengths of the carpet material and the backing material through the nip of a pair of laminating rollers where the appropriate heat and pressure is applied.

In an example of the invention a piece of loom state material made by the method described in UK Patent No. 1,527,622A was laid on a piece of uncured nitrile rubber.

The nitrile rubber was preheated without pressure to a temperature between 80-120°C for 2 to 4 minutes to enable the rubber viscosity to fall to a sufficient level to put the rubber in a condition where it can flow round the monofilament fibres.

The rubber was then heated for a further 4 to 8 minutes at 140-175°C and subjected to a pressure of of between between 15 to 40 psi enabling the rubber to laminate to the carpet, flow round and bond to the monofilaments and complete the rubber cure providing a complete launderable mat.

## Claims

1. A method of forming a washable scraper carpet comprising the steps of forming a quantity of scraper carpet material comprising a mixture of carpet fibres and stiff fibres of a scraper material, characterised by the steps of bringing a length of the scraper carpet material into contact with a corresponding length of uncured rubber material, applying heat to the uncured rubber material for a short period at a temperature between 80 and 120°c to enable the rubber rubber viscosity to reduce to a level where the rubber material can flow round the stiff fibres, and applying heat and pressure to the carpet material and the rubber material to enable the rubber material to laminate to the carpet material, so as to be cured, and to bond to the stiff fibres and form a backing.

2. A method according to claim 1 in which the rubber material is a rubber nitrile.

3. A method according to claim 1 or 2, in which the stiff fibres are heavy monofilaments of nylon, polyester or unplasticised polypropylene.

4. A washable scraper carpet formed by a method according to any preceding claim and comprising a mixture of carpet fibres and stiff fibres and having a backing of a rubber material which has been bonded to the stiff fibres by use of a short pre-heating step prior to a curing and laminating step.
